# EUROPEAN PATENT APPLICATION

(11) **EP 4 266 250 A1**
(43) Date of publication of application: **25.10.2023**
(21) Application number: 21908719.4
(22) Date of filing: 29.09.2021
(51) Int. Cl.: G06T 7/12

(54) **IMAGE PROCESSING METHOD AND CHIP, AND ELECTRONIC DEVICE**

(30) Priority: 24.12.2020 CN 202011548396
(71) Applicant: GUANGDONG OPPO MOBILE TELECOMMUNICATIONS CORP., LTD., Dongguan, Guangdong 523860 (CN)
(72) Inventor: ZHU, Wenbo, Dongguan, Guangdong 523860 (CN)
(74) Representative: Taor, Simon Edward William
(86) International application number: PCT/CN2021/121574
(87) International publication number: WO 2022/134718

(57) **Abstract**

The present disclosure relates to a technical field of image processing, and more particularly to an electronic device. An image processing method includes: acquiring RAW images by an electronic device; processing the RAW images to obtain depth information and edge information of image content by the electronic device; performing blurring processing on the RAW images and correcting the edge information according to the depth information by the electronic device, and processing the images after the blurring processing according to the corrected edge information to obtain the blurred images by the electronic device. Among them, the RAW images contain more image information to detect the edge of the image content and get the edge detection results. At the same time, the RAW images combine the depth information to correct the edge detection results to make the edge detection results more accurate. Then, according to the corrected edge detection results, the images after the blurring process are re-processed to make the blurring effect closer to the ideal state. The effect of image blurring is effectively improved.

## Description

### CROSS-REFERENCE TO RELATED APPLICATIONS

This application claims priority to Chinese Patent Application No. 202011548396.5 titled " IMAGE PROCESSING METHOD, CHIP AND ELECTRONIC DEVICE ", the content of which is incorporated herein by reference in its entirety.

### TECHNICAL FIELD

The present disclosure relates to a technical field of image processing, and more particularly to a chip and an electronic device.

### BACKGROUND

Image blurring is also called background blurring, which specifically means to shallow the depth of field and focus on the target. At present, there are two ways of image blurring, one is based on one camera, and the other is based on two cameras. However, no matter which method is used, the blurring effect is not ideal.

### SUMMARY OF THE DISCLOSURE

The present disclosure aims to solve at least one of the technical problems in the related technology. The first purpose of the present disclosure is to propose an image processing method that can improve the image blurring effect.

The second purpose of the present disclosure is to provide an image processing chip.

The third purpose of the present disclosure is to provide an electronic device.

To achieve the above purposes, an embodiment of a first aspect of the disclosure proposes an image processing method, which includes the following operations: acquiring RAW images; processing the RAW images to obtain depth information and edge information of image content; performing blurring processing on the RAW images and correcting the edge information according to the depth information; and processing the images after the blurring processing according to the corrected edge information to obtain the blurred images.

According to the image processing method of the embodiment of the disclosure, the acquired RAW images are processed to obtain the depth information and edge information of the image content, the RAW images are blurred and edge information is corrected according to the depth information, and the images after the blurring processing are processed according to the corrected edge information to obtain the blurred image. Among them, the RAW images contain more image information to detect the edge of the image content and get the edge detection results. At the same time, the RAW images combine the depth information to correct the edge detection results to make the edge detection results more accurate. Then, according to the corrected edge detection results, the images after the blurring process are re-processed to make the blurring effect closer to the ideal state. The effect of image blurring is effectively improved.

To achieve the above purpose, an embodiment of a second aspect of the present disclosure proposes an image processing chip, which includes: a first chip, a second chip and a connection interface connecting the first chip and the second chip. The first chip is configured to receive RAW images, process the RAW images to obtain depth information and edge information of image content, and correct the edge information according to the depth information. The second chip is configured to perform blurring processing on the RAW images and process the images after the blurring processing according to the corrected edge information to obtain the blurred images.

The image processing chip according to the embodiment of the disclosure receives RAW images, processes RAW images to obtain depth information and edge information of image content, corrects edge information according to depth information through the first chip. Performs blurring processing on the RAW images, and processes the images after the blurring processing according to the corrected edge information to obtain the blurred images through the second chip. Among them, the RAW images contain more image information to detect the edge of the image content and get the edge detection results. At the same time, the RAW images combine the depth information to correct the edge detection results to make the edge detection results more accurate. Then, according to the corrected edge detection results, the images after the blurring process are re-processed to make the blurring effect closer to the ideal state. The effect of image blurring is effectively improved. At the same time, the depth information is obtained by the first chip, which is conducive to the first chip using the depth information to get a better edge detection effect.

In order to achieve the above purpose, an embodiment of the third aspect of the present disclosure proposes an electronic device, which includes a display and the image processing chip. The display is coupled to the image processing chip to display the blurred image processed by the image processing chip.

According to the electronic device of the embodiment of the disclosure, the above image processing chip can obtain blurred images with blurring effect closer to the ideal state, and effectively improve the image blurring effect.

### BRIEF DESCRIPTION OF THE DRAWINGS

**Fig. 1** is an application scenario diagram of the image processing method according to an embodiment of the present disclosure.
**Fig. 2** **is** a flow diagram of the image processing method according to an embodiment of the present disclosure.
**Fig. 3** **is** a flow diagram of depth information acquisition according to an embodiment of the present disclosure.
**Fig. 4** **is** a schematic diagram of image blurring principle.
**Fig. 5a** is an image with noise.
**Fig. 5b** is a blurred image obtained by using the prior art to blur an image with noise.
**Fig. 6** shows an image with a color consistent area and a blurred image obtained by using the prior art to blur an image with a color consistent area.
**Fig. 7** **is a** blurred image obtained by using the prior art to perform the blurring process.
**Fig. 8** **is a flow diagram of the image processing method** according to another embodiment of the present disclosure.
**Fig. 9** **is** a structure diagram of an image processing chip according to an embodiment of the present disclosure.
**Fig. 10** **is** a structure diagram of an image processing chip according to another embodiment of the present disclosure.
**Fig. 11** **is** a structure diagram of an image processing chip according to another embodiment of the present disclosure.
**Fig. 12** **is a** structure diagram of an electronic device according to an embodiment of the present disclosure.

### DETAILED DESCRIPTION

**In order to make the purpose, technical proposal and advantages of the disclosure more clearly, the disclosure is further described in detail below in combination with figures and embodiments. It should be understood that the specific embodiments described here are only used to explain the disclosure, not to limit the disclosure**.

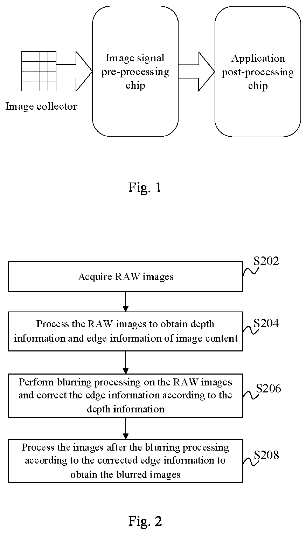

**The image processing method provided in the disclosure can be applied to the electronic device shown in** **Fig. 1****. The electronic device includes an image signal pre-processing chip and an application post-processing chip**. The image signal pre-processing chip is configured to receive RAW images, process RAW images to obtain depth information and edge information of image content, and perform blurring processing and **correct the edge information according to the depth information.** The application post-processing chip is mainly configured to process the images after the blurring processing according to the corrected edge information to obtain the blurred images. Electronic devices can be mobile phones, tablet computers, personal computers, smart cameras, cameras and other devices with photo or video functions.

**In an embodiment, referring to** **Fig. 2****, an image processing method is provided. Taking the disclosure of this method to the electronic device shown in** **Fig. 1** **as an example, the following operations can be included:**

S202, acquire RAW images.

**In this disclosure, RAW images refer to images based on RAW format. RAW format is an image format, which means unprocessed, so RAW images can be understood as the original image data that an image collector such as CMOS or CCD image sensor converts the captured optical signal into a digital signal. In practical applications, RAW images can be acquired through image collectors such as CMOS or CCD image sensors and transferred to the image signal pre-processing chip for processing.**

**S204, process the RAW images to obtain depth information and edge information of image content.**

After receiving the RAW images, the image signal pre-processing chip is configured to calculate the depth information based on the RAW images to obtain the depth information. Among them, depth information is an important information used to describe 3D images and 3D scenes, specifically the distance information between the image collectors and the shooting areas.

**When obtaining depth information based on RAW images, one way is to calculate and obtain it based on two images obtained by two image collectors at the same time. The other way is based on two images obtained by one image collector at different times or one image obtained by one image collector.**

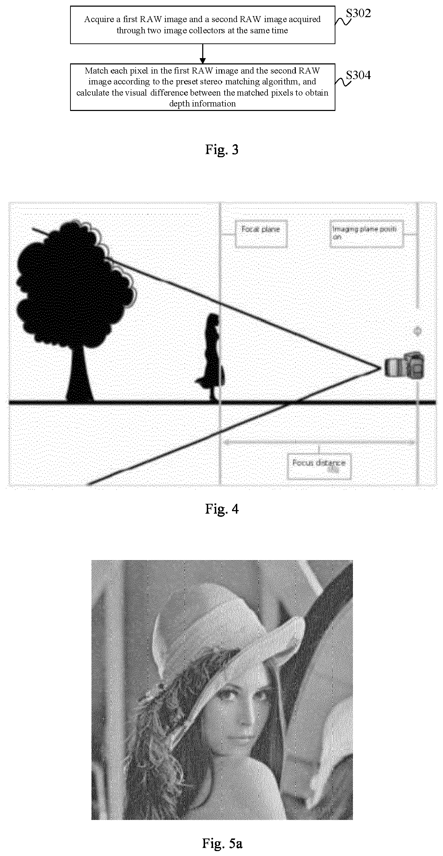

The first method is described below as an example. Referring to Fig. 3, it can include the following operations:

S302, acquire a first RAW image and a second RAW image acquired through two image collectors at the same time. In practical applications, the two image collectors can be a binocular camera.

It should be noted that before operation S302, the two image collectors need to be calibrated, that is, the binocular camera needs to be calibrated to obtain the internal and external parameters, and then determine the mapping relationship between the image coordinate system, the camera coordinate system and the 3D space world coordinate system. The internal parameters include focal length, imaging origin, etc., while the external parameters include the relative position relationship of the binocular camera, such as rotation matrix, translation vector, etc. After obtaining the internal and external parameters, the mapping relationship between the image coordinate system, camera coordinate system, and 3D space world coordinate system can be determined by the calibration method based on the single plane checkerboard. This method not only has high calibration accuracy and stability, but also is simple and requires low accuracy of the calibrator.

Before executing operation S302, it is also necessary to calibrate the two image collectors, that is, the binocular camera, to improve the shooting performance. It is understandable that, ideally, the two image planes of the binocular camera are parallel to the optical axis, but the above requirements cannot be met due to installation errors, etc., so the binocular camera needs to be calibrated. Specifically, the distortion of the two RAW images can be eliminated according to the internal and external parameters of the binocular camera to meet the above requirements as far as possible, so as to reduce the complexity of subsequent pixel matching.

S304, match each pixel in the first RAW image and the second RAW image according to the preset stereo matching algorithm, and calculate the visual difference between the matched pixels to obtain depth information.

In essence, stereo matching of images is to solve the problem of matching pixels of multiple images of the same object in different spatial positions or at different times. Stereo matching algorithms are related algorithms used to solve this problem, including but not limited to SAD (Sum of absolute differences) algorithm, STAD (Sum of Truncated Absolute Differences) algorithm and the SSD (Sum of Squared Differences) algorithm.

After matching each pixel in the first RAW image and the second RAW image according to the preset stereo matching algorithm to obtain a plurality of pixel groups, calculate the visual difference between the pixels in each pixel group, and then obtain the depth information of the RAW images according to the visual difference. For example, determining the proj ection matrix of each pixel in each pixel group under the corresponding camera coordinate system according to the mapping relationship between the image coordinate system, camera coordinate system and 3D space world coordinate system obtained from pre-calibration first. Determining the coordinate position of each pixel in each pixel group under the corresponding camera coordinate system according to the projection matrix. And determining the distance information from each pixel in each pixel group to the center of the corresponding camera coordinate system according to the coordinate position. Then calculating the visual difference value of each pixel group according to the distance information, and determining the depth information of the RAW images according to the visual difference value. For example, depth information=the focal length of the binocular camera * the center distance of the binocular camera/the vertical distance from any position in space to the center line of the binocular camera. Therefore, the depth information of the two images obtained based on the binocular camera can be calculated through a certain algorithm.

It should be noted that the above methods are only for illustrative purposes, and can be implemented in any other existing methods in practical applications, which are not limited here.

After receiving the RAW images, the image signal pre-processing chip also detects the edge of the image content based on the RAW images to obtain the edge information of the RAW images. The so-called edge refers to the collection of pixels around which the gray value of pixels changes rapidly, and it is the most basic feature of an image. The edge can be roughly divided into two types, one is a step edge, and the gray values of pixels on both sides of the edge are obviously different. The other is roof like edge, which is at the turning point of gray value change from small to large and then to small. The edge mainly exists between objects, objects and background, regions and regions (including different colors). The internal features or attributes of the areas separated by edges are consistent, while the internal features or attributes of different areas are different. Edge detection is realized by using the difference between the object and the background in some image features, including gray value, color or texture features. Edge detection is actually to detect the location where image features change.

During edge detection, preset edge detection operators and algorithms can be used to detect the edge of RAW images content to obtain the edge information of RAW images. For example, Laplacian operator, Roberts operator, Sobel operator, log (Laplacian Gauss) operator, Kirsch operator or Prewitt operator, and multi-scale wavelet edge detection algorithm can be used to detect the edge of RAW images content.

In one embodiment, the RAW images are processed to obtain the edge information of the image content, including: extracting image components from the RAW images to obtain a single image component. Detecting image content edge of the single image component to obtain the edge information.

After receiving the RAW images, the image signal pre-processing chip can first be configured to extract a certain image component from the RAW images (such as gray component extraction, etc.) to obtain a single image component (such as gray image, etc.), and then carry out edge detection of the image content according to the single image component to determine the edge information of the image content in the RAW images. Among them, Laplacian operator, Roberts operator, Sobel operator, log (Laplacian Gauss) operator, Kirsch operator or Prewitt operator, and multi-scale wavelet edge detection algorithm can be used to detect the edge of RAW image content.

It should be noted that in this disclosure, edge information can be obtained by edge detection of RAW images, or by edge detection of the single image component after the RAW image processing. Among them, although the former contains more data information, and the edge detection effect is better, especially the edge detection of the same color. Since the subsequent edge detection results, that is, the edge information, will be corrected, the latter can ultimately achieve the same effect, and the latter has less computation, making the image processing faster.

S206, **perform blurring processing on the RAW images and correcting the edge information according to the depth information.**

The image signal pre-processing chip can be configured to blur the RAW images according to the depth information after calculating the depth information of the RAW images.

At present, there are two commonly used blurring processing methods, one is based on monocular camera, the other is based on binocular camera. As shown in Fig. 4, the former mostly realizes blurring by performing fuzzy algorithm processing on the area outside the shooting object in the focus area, or background segmentation by using deep learning. For example, training neural network with data set to obtain neural network model, and realizing background segmentation through neural network model, so as to determine the object to focus clearly and the background to be blurred. The latter mostly uses two images taken by the binocular camera to build a depth image, infers the before and after relationship of the image content based on the depth image, and then controls the degree of blurring. Specifically, the distance between each pixel and the focal plane can be calculated by using the visual difference of the binocular camera, so as to blur according to the distance of the focal plane. In this disclosure, the RAW images can be blurred any way of the prior art, which is not limited here.

After the image signal pre-processing chip is configured to calculate the depth information of RAW images to obtain the depth information, it is also configured to correct the edge information according to the depth information to obtain more accurate edge information of image content.

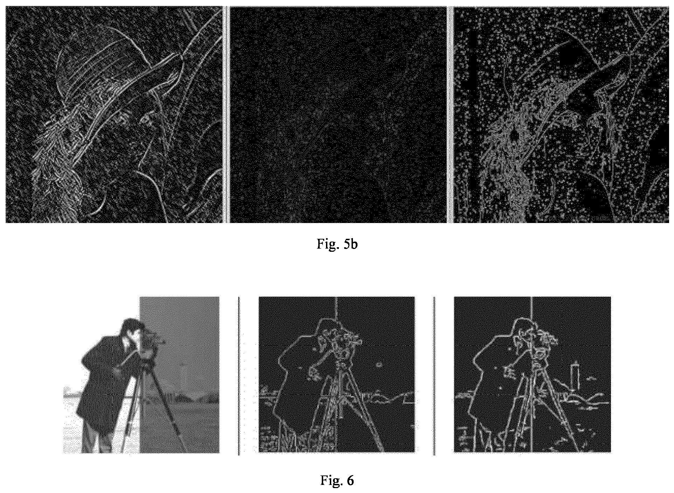

Specifically, as shown in Figs. 5a to 5b, when the image has noise, the edge detection effect will become very poor, and even wrong edge detection results will happen. This is because the noise in the image after conversion will become similar to the result after object edge conversion, leading to the edge cannot be detected. As shown in Fig. 6, for areas with the same color, even if they have edges, they can't be distinguished because the results after color conversion are similar, resulting in the edge can't be detected. Based on this, in this disclosure, after the RAW images are edge detected to obtain edge information, the depth information is also used to correct the edge detection result to obtain more accurate edge information of image content.

In some embodiments, edge information is corrected according to depth information, including: acquiring depth information of pixels corresponding to edge information and pixels around the edge information. Correcting the edge information based on the similarity and gradient of the edge depth information according to the depth information of the pixels corresponding to the edge information and pixels around the edge information.

In other words, the edge of the object is corrected by using the similarity and gradual change of the depth information of the edge of the object to obtain more accurate edge information of the image content.

As a specific example, according to the depth information of the pixels corresponding to the edge information and the depth information of the surrounding pixels, based on the similarity and gradient of the edge depth information, the edge information is corrected, including: removing pixels whose depth information in the pixels corresponding to the edge information is inconsistent with the depth information of other pixels. In other words, the pixels with too large or too small depth information in the pixels corresponding to the edge information are removed from the edge information, so that the corrected edge information is more accurate and closer to the ideal state.

Specifically, the depth information of the pixels corresponding to the edge of the object can be obtained first, and then whether the depth information of these pixels is consistent (such as the same or the difference is less than a smaller value) can be judged. If not, the pixels with larger differences will be removed from the edge information, so that the corrected edge information is more perfect and closer to the ideal state. For example, for an image with noise, after conversion, the noise will become similar to the result of object edge conversion. At this time, it may be taken as edge information, leading to edge error detection. However, the depth information of the noise is not the same as the depth information of the object edge, so it can be removed from the edge information based on the difference in depth information. Thus, more accurate edge information can be obtained.

As another specific example, according to the depth information of the pixels corresponding to the edge information and the depth information of the surrounding pixels, based on the similarity and gradient of the edge depth information, the edge information is corrected, including: supplementing the edge information according to the pixels around the edge information when the depth information of the pixels around the edge information is consistent with the depth information of the pixels corresponding to the edge information. That is to say, the pixels surrounding the pixels corresponding to edge information whose depth information is consistent with the depth information of the pixels corresponding to the edge information are added to the edge information, so that the corrected edge information is more accurate and closer to the ideal state.

Specifically, the depth information of the pixels corresponding to the edge of the object and the depth information of the pixels around the edge of the object can be obtained first, and then whether the depth information of the pixels corresponding to the edge of the object is consistent with the depth information of the pixels around the edge of the object (such as the same or the difference is less than a smaller value) can be judged. If they are consistent, the pixels around the edge of the object are added to the edge information. If they are inconsistent, they will not be supplemented, so that the corrected edge information is more perfect and closer to the ideal state. For example, for areas with consistent color, because the traditional edge detection is based on color (differentiated by the change of gray value), there will be no edge detection or edge error detection. While the depth information of the real object edge is consistent or gradual, which is different from non-edge areas. That is, the depth information near the edge (especially the extension area at both ends of the edge with proper traditional processing methods) changes slowly or is relatively close, and does not jump like the area outside the edge. Therefore, the traditional edge detection results can be corrected with depth information to obtain more accurate edge information, making the edge detection results more perfect.

In practical applications, when correcting the edge detection results based on depth information, focus on the symmetrical edge detection results of the same depth or focal plane, correct the edge detection results through the depth information of the whole image, and complete the edges according to the principle that the edge depth information has similarity and gradual change. For example, for the same brightness area. If edge recognition is only based on a single component, some edges will fail to recognize, but the edge recognition can be supplemented by combining depth information.

It should be noted that in the above example, the blurring of RAW images can also be realized by the application post-processing chip. The specific settings can be selected according to the actual needs, and there is no restriction here. However, the calculation of depth information needs to be carried out in the image signal pre-processing chip, so that the image signal pre-processing chip can use the depth information to correct the edge information and obtain better edge detection effect.

S208, process the image after the blurring processing according to the corrected edge information to obtain the blurred image.

As shown in Fig. 4, for the image blurring processing, the farther away from the focal plane in theory, the larger the dispersion circle, the more blurred the image will be, that is, the closer to the focal plane, the clearer the image will be. The ideal effect of image blurring is that although all the images outside the depth of field are blurry, the degree of blurring is different. The closer to the focal plane, the clearer it will be, and the farther away from the focal plane, the blurrier it will be.

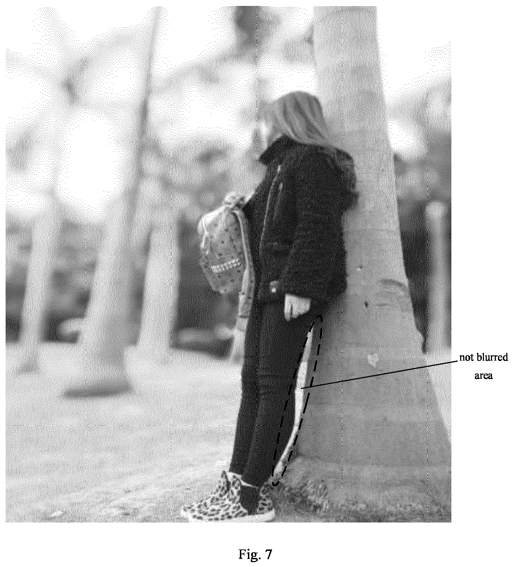

However, in the actual process of blurring, it is easy to have the problem of false blurring or missing blurring, which leads to the unsatisfactory effect of blurring, especially for the small gap area. As shown in Fig. 7, although there is a clear distinction between the character and the background in the blurred image, there are still big problems at the edge of the character, such as the gap between the tree and the leg (in the dotted line box in the figure) is obviously not blurred, and there is a missing blur. In addition, theoretically, the degree of blurring from near to far should be gradually increased, but the degree of blurring of parts of the image outside the character is the same. Based on this, in this disclosure, the application post-processing chip can be configured to process the image after the blurring processing according to the corrected edge information to obtain the blurred image. So as to reduce the situation of missed blurring and false blurring, while making the blurred image more natural, and effectively improving the image blurring effect.

In one embodiment, the image after the blurring processing is processed according to the corrected edge information to obtain the blurred image, including: detecting the blurred result of the image after the blurring processing according to the corrected edge information to obtain the abnormal areas of the blurring. Correcting the abnormal areas of the blurring to obtain the blurred image.

That is to say, the edge of the image after the blurring processing can be recognized according to the corrected edge information, and the blurred results of the edge areas can be compared to determine whether the blurring has been carried out and whether the false blurring has been carried out, and the areas that are missed and false blurring can be corrected. For example, the areas that are too high or too low in the degree of blurring can be adjusted, and the areas that are missed and false blurring can be re-blurred. Finally, a more accurate blurred image is obtained.

In one embodiment, detect the blurred result of the image after the blurring processing according to the corrected edge information, and obtain the abnormal areas of the blurring, including: determining the missing blurring areas by comparing whether the value of the corresponding pixels between the RAW images and the images after the blurring processing has changed or not based on the edge information. Determining the false blurring areas and the insufficient blurring areas by comparing the change amplitude of the object pixel value between the RAW images and the images after the blurring processing based on the edge information.

That is to say, by combining edge information, it is possible to detect whether there is missing blurring by comparing whether the value of the corresponding pixels of the image before and after the blurring changes. It is possible to detect whether there is false or incomplete blurring by comparing the change amplitude of pixels before and after the same depth image area is blurred.

Specifically, the detection of image blurred results is mainly based on the principle of consistent degree of blurring at the same depth. For edge blurring of objects with the same depth, the degree of blurring is consistent in theory, which can be reflected in the image to detect the change of the degree of blur before and after the blurring. Specifically, it can be inferred by statistical comparison of the change degree of pixel values before and after the blurring. From this, it can be determined whether there is false blurring. For missing blurring, that is, the image area that should be blurred is not blurred. Generally, this situation often occurs in some small segmentation areas (that is, areas with large differences in depth information), such as gaps or corners of objects. Therefore, the principle of depth information similarity can also be used. By comparing the depth information on the left and right sides of the edge and whether the image has been processed. Whether there is a missing blur can be detected, and then subsequent processing is carried accordingly. It should be noted that the edge judgment can determine the key judgment area based on the focal plane, such as the gap in the middle of the human arm (the depth information of the background and the plane where the person is located is quite different, whether it is reflected during the blurring process).

In practical applications, the blurred result can be detected according to the change ratio of the value of the corresponding pixels of the image after the blurring processing to the value of the corresponding pixels of the RAW images. And when the detection result determines that it is necessary to carry out the blurring correction processing for the blurred image, the image area in the same focal plane can be subject to the equal proportion pixels weakening processing according to the change ratio, that is, re-blurring processing. This makes the blurring effect more ideal.

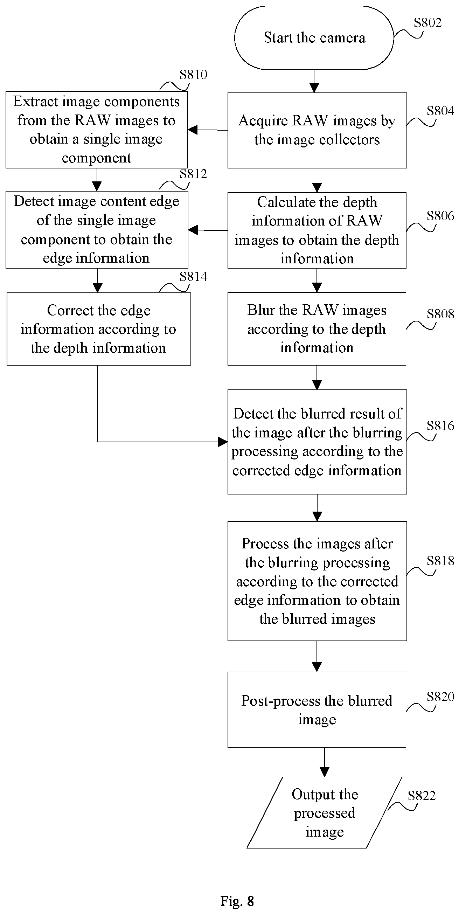

As a specific example, referring to Fig. 8, the image processing method may include the following operations:
S802, start the camera.
S804, acquire RAW images by the image collectors.
S806, calculate the depth information of RAW images to obtain the depth information.
S808, blur the RAW images according to the depth information.
S810, extract image components from the RAW images to obtain a single image component.
S812, detect image content edge of the single image component to obtain the edge information.
S814, correct the edge information according to the depth information.
S816, detect the blurred result of the image after the blurring processing according to the corrected edge information.
S818, process the images after the blurring processing according to the corrected edge information to obtain the blurred images.
S820, post-process the blurred image.
S822, output the processed image.

In the above embodiment, the image signal pre-processing chip can be configured to give priority to image data and has fast computing speed to quickly identify and analyze RAW images, carry out edge detection, obtain the edge information of image content, and carry out edge recognition on the image after blurring according to the edge information. As well as comparing the blurred results of the edge area (whether it has been blurred or not, and whether it has been falsely blurred), based on the comparison results, the abnormal areas of the blurring (such as missed blurring and false blurring) are corrected. So that the image blurring effect is closer to the ideal blurring effect, thus improving the user's shooting experience. At the same time, due to the use of depth information to supplement the edge detection results. The result of edge detection is more accurate than that of traditional edge detection.

It should be understood that although the operations in the flow charts of Figs. 2-3,8 are displayed in order as indicated by the arrows, these operations are not necessarily executed in order as indicated by the arrows. Unless explicitly stated in this disclosure, there is no strict order limit for the execution of these operations. These operations can be executed in other order. Moreover, at least some operations in Figs. 2-3,8 can include multiple sub-operations or stages. These sub-operations or stages are not necessarily completed at the same time, but can be executed at different times. The execution sequence of these sub-operations or stages is not necessarily sequential. Instead, it can be executed in turn or alternatively with other operations or sub-operations of other operations or at least part of a phase.

According to the image processing method of the embodiment of the disclosure, **the acquired RAW images are processed to obtain the depth information and edge information of the image content, the RAW images are blurred and edge information is corrected according to the depth information, and the images after the blurring processing are processed according to the corrected edge information to obtain the blurred image. Among them, the RAW images contain more image information to detect the edge of the image content and get the edge detection results. At the same time, the RAW images combine the depth information to correct the edge detection results to make the edge detection results more accurate. Then, according to the corrected edge detection results, the images after the blurring process are re-processed to make the blurring effect closer to the ideal state. The effect of image blurring is effectively improved.**

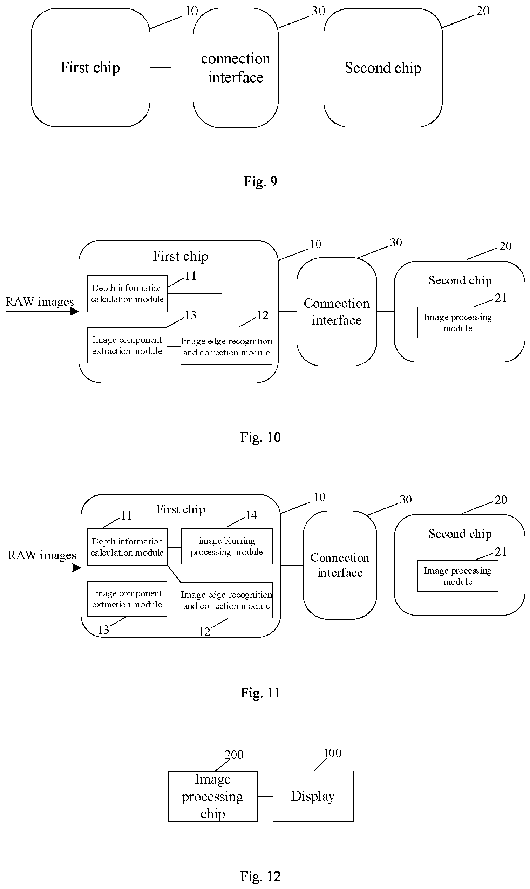

In one embodiment, an image processing chip is provided. As shown in Fig. 9, the image processing chip includes: a first chip 10, a second chip 20, and a connection interface 30 connecting the first chip 10 and the second chip 20. The first chip 10 is configured to **configured to** receive the RAW images, **process the RAW images to obtain depth information and edge information of image content, and correct the edge information according to the depth information.** The second chip 20 is configured to **perform blurring processing on the RAW images and** process the images after the blurring processing according to the corrected edge information to obtain the blurred images.

In one embodiment, the connection interface 30 may include one or more of MIPI (Mobile Industry Processor Interface) and PCIE (Peripheral Component Interface Express, high-speed serial computer expansion bus standard).

In one embodiment, referring to Fig. 10, the first chip 10 includes: depth information calculation module 11 and image edge recognition and correction module 12. The depth information calculation module 11 is configured to **process the RAW images to obtain depth information.** The image edge recognition and correction module 12 is configured to **process the RAW images to obtain edge information of image content, and correct**

### the edge information according to the depth information.

In one embodiment, referring to Fig. 10, the first chip 10 also includes: image component extraction module 13, which is configured to extract image components from the RAW images to obtain a single image component. The image edge recognition and correction module 12 is configured to detect image content edge of the single image component to obtain the edge information.

In one embodiment, the image edge recognition and correction module 12 is specifically configured to acquire depth information of pixels corresponding to edge information and pixels around the edge information, and correct the edge information based on the similarity and gradient of the edge depth information according to the depth information of the pixels corresponding to the edge information and pixels around the edge information.

In one embodiment, the second chip 20 includes an image processing module 21, which is configured to **perform blurring processing on the RAW images and** process the images after the blurring processing according to the corrected edge information to obtain the blurred images.

In one embodiment, the image processing module 21 is specifically configured to detect the blurred result of the images after the blurring processing according to the corrected edge information to obtain the abnormal areas of the blurring, and correct the abnormal areas of the blurring to obtain the blurred images.

In one embodiment, the image processing module 21 is specifically configured to: **determine the missing blurring areas by comparing whether the value of the corresponding pixels between the RAW images and the images after the blurring processing has changed or not based on the edge information and determine the false blurring areas and the insufficient blurring areas by comparing the change amplitude of the object pixel value between the RAW images and the images after the blurring processing based on the edge information.**

In one embodiment, referring to Fig. 11, the first chip 11 also includes an image blurring processing module 14, which is configured to **perform blurring processing on the RAW images according to depth information,** so that the second chip 20 can be configured to process the images after the blurring processing according to the corrected edge information to obtain the blurred images.

For the specific definition of the image processing chip, please refer to the definition of the image processing method above, which will not be repeated here. Each module in the image processing chip can be realized in whole or in part by software, hardware and their combination.

The image processing chip according to the embodiment of the disclosure is configured to acquire RAW images through the first chip, process RAW images to acquire depth information and edge information of image content, correct edge information according to depth information, and blur RAW images according to depth information through the second chip. And according to the corrected edge information, the image after the blurring processing is processed to obtain the blurred image. Among them, the RAW images contain more image information to detect the edge of the image content and get the edge detection results. At the same time, the RAW images combine the depth information to correct the edge detection results to make the edge detection results more accurate. Then, according to the corrected edge detection results, the image after the blurring process is re-processed to make the blurring effect closer to the ideal effect. The effect of image blurring is effectively improved. At the same time, the depth information is obtained by the first chip, which is conducive to the first chip using the depth information to get a better edge detection effect.

In one embodiment, referring to Fig. 12, an electronic device is provided, including a display 100 and the aforementioned image processing chip 200. The display 100 is coupled to the image processing chip 200 to display the blurred image processed by the image processing chip 200.

According to the electronic device of the disclosure embodiment, the above image processing chip can obtain a blurred image whose blurring effect is closer to the ideal effect, and effectively improve the image virtual effect.

Those skilled in the art can understand that the realization of all or part of the processes in the methods of the above embodiments can be completed by instructing the relevant hardware through a computer program. The computer program can be stored in a non-volatile computer readable storage medium. When the computer program is executed, it can include the processes of the embodiments of the above methods. Among them, any reference to memory, storage, database or other media used in the embodiments provided in the disclosure can include non-volatile and/or volatile memory. Non-volatile memory can include read-only memory (ROM), programmable ROM (PROM), electrically programmable ROM (EPROM), electrically erasable programmable ROM (EEPROM) or flash memory. Volatile memory may include random access memory (RAM) or external cache memory. As an illustration rather than limitation, RAM is available in many forms, such as static RAM (SRAM), dynamic RAM (DRAM), synchronous DRAM (SDRAM), dual data rate SDRAM (DDRSDRAM), enhanced SDRAM (ESDRAM), synchronous link DRAM (SLDRAM), memory bus direct RAM (RDRAM), direct memory bus dynamic RAM (DRDRAM), and memory bus dynamic RAM (RDRAM).

The technical features of the above embodiments can be arbitrarily combined. To make the description concise, all possible combinations of the technical features of the above embodiments have not been described. However, as long as there is no contradiction in the combination of these technical features, it should be considered as the scope of the description.

The above embodiments only express several embodiments of the disclosure, and the description is more specific and detailed, but it cannot be understood as a limitation on the scope of the patent disclosure. It should be noted that for ordinary technicians in the art, certain modifications and improvements can be made without departing from the concept of the disclosure, which are within the protection scope of the disclosure. Therefore, the scope of protection of the patent disclosure shall be subject to the appended claims.

## Claims

1. **An image processing method, characterized by comprising:**
**acquiring, RAW images;**
**processing, the RAW images to obtain depth information and edge information of image content;**
**performing, blurring processing on the RAW images and correcting the edge information according to the depth information;**
processing, the images after the blurring processing according to the corrected edge information to obtain the blurred images.

2. **The image processing method according to claim 1, wherein processing the RAW images to obtain edge information of image content further comprising:**
extracting, image components from the RAW images to obtain a single image component;
detecting, image content edge of the single image component to obtain the edge information.

3. **The image processing method according to any one of claim 1, wherein correcting the edge information according to the depth information further comprising:**
acquiring, depth information of pixels corresponding to edge information and pixels around the edge information;
correcting, the edge information based on the similarity and gradient of the edge depth information according to the depth information of the pixels corresponding to the edge information and pixels around the edge information.

4. **The image processing method according to any one of claims 1-3, wherein** processing, the images after the blurring processing according to the corrected edge information to obtain the blurred images **further comprising:**
detecting, the blurred result of the images after the blurring processing according to the corrected edge information to obtain the abnormal areas of the blurring;
correcting, the abnormal areas of the blurring to obtain the blurred images.

5. **The image processing method according to claim 4, wherein detecting the blurred result of the images** after the blurring processing according to the corrected edge information to obtain the abnormal areas of the blurring **further comprising:**
**determining, the missing blurring areas by comparing whether the value of the corresponding pixels between the RAW images and the images after the blurring processing has changed or not based on the edge information;**
**determining the false blurring areas and the insufficient blurring areas by comparing the change amplitude of the object pixel value between the RAW images and the images after the blurring processing based** on the **edge information.**

6. **An image processing chip, comprising:**
**a first chip, a second chip and a connection interface connecting the first chip and the second chip;**
**wherein,**
**the first chip, configured to** receive the RAW images, **process the RAW images to obtain depth information and edge information of image content, and correct the edge information according to the depth information;**
**the second chip, configured to perform blurring processing on the RAW images and** process the images after the blurring processing according to the corrected edge information to obtain the blurred images.

7. **The image processing chip according to claim 6, the first chip further comprising:**
a depth information calculation module, **configured to process the RAW images to obtain depth information;**
**an image edge recognition and correction module, configured to process the RAW images to obtain edge information of image content, and correct the edge information according to the depth information.**

8. **The image processing chip according to claim 7, the first chip further comprising:**
an image component extraction module, configured to extract image components from the RAW images to obtain a single image component;
**the image edge recognition and correction module, configured to** detect image content edge of the single image component to obtain the edge information.

9. **The image processing chip according to claim 7, the image edge recognition and correction module is further configured to** acquire depth information of pixels corresponding to edge information and pixels around the edge information, and correct the edge information based on the similarity and gradient of the edge depth information according to the depth information of the pixels corresponding to the edge information and pixels **around the edge information.**

10. **The image processing chip according to any one of claims 6-9, the second chip further comprising:**
**an image processing module, configured to** detect the blurred result of the images after the blurring processing according to the corrected edge information to obtain the abnormal areas of the blurring, and correct the abnormal areas of the blurring to obtain the blurred images.

11. **The image processing chip according to claim 10, the image processing module is further configured to determine the missing blurring areas by comparing whether the value of the corresponding pixels between the RAW images and the images after the blurring processing has changed or not based on the edge information and determine the false blurring areas and the insufficient blurring areas by comparing the change amplitude of the object pixel value between the RAW images and the images after the blurring processing based on the edge information.**

12. **The image processing chip according to claim 7, the first chip further comprising:**
**an image processing module, configured to perform blurring processing on the RAW images according to depth information,**
**so that the second chip is configured to** process the images after the blurring processing according to the corrected edge information to obtain the blurred images.

13. **An electronic device, comprising a display and an image processing chip according to any one of claims 6-12, the display is configured to display the blurred images processed by the image processing chip, wherein the display is coupled to the image processing chip.**
